# EUROPÄISCHE PATENTSCHRIFT

(11) **EP 3 539 627 B1**
(45) Veröffentlichungstag und Bekanntmachung des Hinweises auf die Patenterteilung: **11.11.2020**
(21) Anmeldenummer: 18162342.2
(22) Anmeldetag: 16.03.2018
(51) Int. Cl.: A63G 7/00, A63G 31/16

(54) **SYNCHRONISIERUNGSVORRICHTUNG MIT EINER BASISSTATION ZUM SYNCHRONISIEREN VON HEAD-MOUNTED-DISPLAYS MIT EINER VIRTUELLEN WELT IN EINEM FAHRGESCHÄFT, FAHRGESCHÄFT MIT EINER DERARTIGEN SYNCHRONISIERUNGSVORRICHTUNG SOWIE VERFAHREN ZUM BETREIBEN EINES SOLCHEN FAHRGESCHÄFTS**
SYNCHRONIZING DEVICE WITH A BASE STATION FOR SYNCHRONIZING OF HEAD-MOUNTED-DISPLAYS WITH A VIRTUAL WORLD IN A RIDE, RIDE WITH SUCH A SYNCHRONIZATION DEVICE AND METHOD FOR OPERATING SUCH A RIDE
DISPOSITIF DE SYNCHRONISATION DESTINÉ À LA SYNCHRONISATION DES LUNETTES DE VISUALISATION AVEC UN MONDE VIRTUEL DANS UNE ATTRACTION FORAINE, ATTRACTION FORAINE POURVUE D'UN TEL DISPOSITIF DE SYNCHRONISATION ET PROCÉDÉ DE FONCTIONNEMENT D'UNE TELLE ATTRACTION FORAINE

(43) Veröffentlichungstag der Anmeldung: 18.09.2019
(73) Patentinhaber: VR Coaster GmbH & Co. KG, 67663 Kaiserslautern (DE)
(72) Erfinder: Heyse, Michael, 55118 Mainz (DE)
(74) Vertreter: Westphal, Mussgnug & Partner Patentanwälte mbB

(56) Entgegenhaltungen:
- WO-A1-2017/153532
- CN-A- 107 037 880
- DE-A1-102015 100 943
- US-A1- 2017 072 316

## Beschreibung

Die vorliegende Erfindung betrifft eine Synchronisierungsvorrichtung mit einer Basisstation zum Synchronisieren von Head-Mounted-Displays mit einer virtuellen Welt in einem Fahrgeschäft. Weiterhin betrifft die Erfindung ein Fahrgeschäft mit einer derartigen Synchronisierungsvorrichtung. Darüber hinaus betrifft die Erfindung ein Verfahren zum Betreiben eines solchen Fahrgeschäfts.

Insbesondere aufgrund der steigenden Prozessorleistung von Computern und der steigenden drahtlos übertragbaren Datenmengen kann das Konzept der virtuellen Realität (VR) auf immer mehr Anwendungsbereiche übertragen werden. Ein hervorzuhebender Anwendungsbereich stellen Fahrgeschäfte dar, die es in besonders umfangreicher Weise ermöglichen, Bewegungen, die in der virtuellen Realität stattfinden, mit realen Bewegungen zu verknüpfen, wodurch eine besonders weitgehende Immersion und ein entsprechend intensives Fahrerlebnis für den Fahrgast erreicht werden. Derartige Fahrgeschäfte sind beispielsweise aus der EP 2 138 213 B1, der JP 2001 062 154 A, der US 6 179 619 B1 und der EP 3 041 591 B1 bekannt.

Um die virtuelle Realität dem Fahrgast zugänglich zu machen, werden typischerweise Head-Mounted-Displays wie VR-Brillen verwendet, die in vielen Fällen drahtlos mit VR-Einrichtungen kommunizieren, welche die virtuelle Realität erzeugen. Es ist aber auch durchaus möglich, dass die VR-Einrichtung in das Head-Mounted-Display integriert ist. Die Head-Mounted-Displays werden üblicherweise von den Fahrgeschäften vor Beginn der Fahrt an die Fahrgäste ausgegeben und nach Abschluss der Fahrt wieder eingesammelt. Die Ausgabe und das Einsammeln der Head-Mounted-Displays erfolgt dabei in einem Bahnhof des Fahrgeschäfts, in welchem die Fahrgäste in das Fahrzeug einsteigen und wieder aus dem Fahrzeug aussteigen. Nachdem die Fahrgäste in das Fahrzeug eingestiegen sind, müssen die Head-Mounted-Displays mit der virtuellen Realität synchronisiert werden, damit die virtuelle Realität mit der aktuellen Position und der aktuellen Ausrichtung des Head-Mounted-Displays übereinstimmt und eine zufriedenstellende Immersion gewährleistet ist. Da der Fahrgast das Head-Mounted-Display auf seinen Kopf aufsetzt, entsprechen die Position des Head-Mounted-Displays der Position des Fahrgasts und die Ausrichtung des Head-Mounted-Displays der Ausrichtung des Kopfes des Fahrgasts.

Die Synchronisierung wird bei bekannten Fahrgeschäften dadurch vorgenommen, den Fahrgast in eine bestimmte Richtung, meistens in Fahrtrichtung, blicken zu lassen und dabei die Darstellung der virtuellen Realität auf dem Head-Mounted-Display zu starten. Die Position und die Ausrichtung des Head-Mounted-Displays bei der Synchronisierung werden dabei als Referenz verwendet. Die Darstellung der virtuellen Realität in Abhängigkeit der Position und der Ausrichtung des Head-Mounted-Displays während der Fahrt beziehen sich daher auf die Position und die Ausrichtung des Head-Mounted-Displays bei der Synchronisierung. Je genauer sich die tatsächliche und die von der VR-Einrichtung beim Erzeugen der virtuellen Realität angenommene Position und die Ausrichtung des Head-Mounted-Displays übereinstimmen, desto höher die Immersion. Hierzu sollen die Fahrgäste bei der Synchronisierung einen bestimmten Punkt fixieren, wobei sie den Kopf in Fahrtrichtung halten sollen. Die exakte Ausrichtung des Kopfes bei der Synchronisierung kommt dabei eine entscheidende Bedeutung zu. Um dies zu erreichen, ist meist eine Erklärung oder eine Einweisung durch das Personal notwendig. Dennoch können Fehlbedienungen nicht ausgeschlossen werden, wodurch mehrere Synchronisierungen durchgeführt werden müssen. Folglich ist die Synchronisierung mit einem erhöhten Personal- und Zeitaufwand verbunden. Ein derartiges Fahrgeschäft ist beispielsweise aus der US 2017/072316 A1 vorbekannt.

Aufgabe einer Ausführungsform und einer Ausbildung der vorliegenden Erfindung ist es daher, eine Abhilfe für die oben beschriebene Situation zu schaffen und insbesondere eine Synchronisierungsvorrichtung und ein Fahrgeschäft zu schaffen, mit welchen eine Synchronisierung eines Head-Mounted-Displays mit der virtuellen Realität unabhängig von der Ausrichtung des Kopfes des Fahrgasts ermöglicht wird. Darüber hinaus liegt eine Ausgestaltung der Erfindung die Aufgabe zugrunde, ein Verfahren bereitzustellen, welches eine Synchronisierung eines Head-Mounted-Displays mit der virtuellen Realität unabhängig von der Ausrichtung des Kopfes des Fahrgasts ermöglicht.

Diese Aufgabe wird mit den in den Ansprüchen 1, 4 und 10 angegebenen Merkmalen gelöst. Vorteilhafte Ausführungsformen sind Gegenstand der Unteransprüche.

Eine Ausführungsform der Erfindung betrifft eine Synchronisierungsvorrichtung zum Synchronisieren von Head-Mounted-Displays mit einer virtuellen Welt in einem Fahrgeschäft, umfassend zumindest ein Head-Mounted-Display, mit welchem eine von einer VR-Einrichtung erzeugte virtuelle Realität darstellbar ist, eine Basisstation zum Ablegen des Head-Mounted-Displays, wobei die Basisstation Aufnahmemittel aufweist, mit denen das Head-Mounted-Display in einer definierten Position und Ausrichtung in der Basisstation ablegbar ist, und eine Display-Positionserfassungseinrichtung zum Erfassen der Position und Ausrichtung des Head-Mounted-Displays, wobei die Synchronisierungsvorrichtung derart eingerichtet ist, dass die virtuelle Realität mit dem Head-Mounted-Display unter Berücksichtigung der von der Display-Positionserfassungseinrichtung erfassten Position und Ausrichtung des Head-Mounted-Displays in Bezug auf die Position und Ausrichtung des Head-Mounted-Displays in der Basisstation synchronisiert wird, sobald das Head-Mounted-Display von der Basisstation entnommen wird.

Bei der vorschlagsgemäßen Synchronisierungsvorrichtung wird das Head-Mounted-Display in einer ausreichend definierten Position und mit einer ausreichend definierten Ausrichtung in der Basisstation abgelegt. Folglich stimmen die tatsächliche und die beim Erzeugen der virtuellen Realität angenommene Position und die Ausrichtung des Head-Mounted-Displays vollständig überein. Sobald das Head-Mounted-Display von der Basisstation entnommen wird, wird die Synchronisierung des Head-Mounted-Displays mit der virtuellen Realität vorgenommen und die aktuelle Position und die aktuelle Ausrichtung des Head-Mounted-Displays und folglich die des Benutzers auf die Position und die Ausrichtung des Head-Mounted-Displays in der Basisstation bezogen. Die Entnahme des Head-Mounted-Displays kann beispielsweise mittels der Display-Positionserfassungseinrichtung erkannt werden.

Die Display-Positionserfassungseinrichtung kann sich dabei innerhalb des Head-Mounted-Displays befinden, oder aber in einer externen Vorrichtung wie beispielsweise der Basisstation. Es ist aber auch denkbar, dass die Display-Positionserfassungseinrichtung sich in einem separaten Rechenzentrum befindet. Ebenso ist es denkbar, dass die Basisstation am Fahrzeug angeordnet ist.

Die Display-Positionserfassungseinrichtung kann wie folgt ausgestaltet sein: Es kann ein sogenanntes "outside-in-tracking" eingesetzt werden, bei dem ein Positionssensor getrennt und außerhalb von den Head-Mounted-Displays angeordnet ist. Hierzu können Marker an den Head-Mounted-Displays der Fahrgäste befestigt sein. Der Positionssensor kann die Bewegung der Marker verfolgen, wodurch die Position des Head-Mounted-Displays errechnet und an die VR-Einrichtung übertragen werden kann. Die Ausrichtung des Head-Mounted-Displays kann mittels heutzutage in sehr großen Stückzahlen beispielsweise in Smartphones verbauten Komponenten wie Gyro-, Beschleunigungs- und/oder Magnetsensoren ermittelt werden. Diese Komponenten sind im Head-Mounted-Display verbaut.

Darüber hinaus können sogenannte "inside-out-trackings" verwendet werden, bei denen der Positionssensor auf dem Head-Mounted-Display angeordnet ist. Auch hierbei können Marker verwendet werden, die an festen Gegenständen des Fahrgeschäfts, beispielsweise an Treppen oder Wänden, befestigt sind.

Die Synchronisierung erfolgt unabhängig von der Ausrichtung und der Position des Kopfes des Benutzers. Die mit der vorschlagsgemäßen Synchronisierungsvorrichtung erreichbare Immersion ist reproduzierbar hoch. Da die Mithilfe des Benutzers bei der Synchronisierung nicht erforderlich ist, kann die Synchronisierung schneller und ohne die Gefahr von Fehlbedienungen durchgeführt werden. Je nach Ausgestaltung kommunizieren die Synchronisierungsvorrichtung und/oder das Head-Mounted-Display insbesondere drahtlos mit einer externen VR-Einrichtung, welche die virtuelle Realität erzeugt, oder die VR-Einrichtung ist in das Head-Mounted-Display integriert. Nach Maßgabe einer weiteren Ausführungsform weist die Basisstation Präsenzerkennungsmittel auf, mit denen erkennbar ist, ob das Head-Mounted-Display in der Basisstation abgelegt ist und wann das Head-Mounted-Display von der Basisstation entnommen wird. Zwar kann auch die Display-Positionserfassungseinrichtung erkennen, dass das Head-Mounted-Display von der Basisstation entnommen wird, hierzu muss sie aber immer aktiviert sein. Das Präsenzerkennungsmittel kann beispielsweise einen Reed-Kontakt umfassen, der mit der Entnahme des Head-Mounted-Displays von der Basisstation schaltet und hierdurch die Synchronisierungsvorrichtung und die Display-Positionserfassungseinrichtung aktiviert. Die Synchronisierungsvorrichtung lässt sich daher energieeffizienter und mit einem geringeren Datenvolumen betreiben.

In einer weitergebildeten Ausführungsform kann die Basisstation eine Ladeeinrichtung zum Aufladen des Head-Mounted-Displays aufweisen. Die Ladeeinrichtung kann so ausgestaltet sein, dass beim Ablegen des Head-Mounted-Displays in die Basisstation ein Kontakt zur Spannungsquelle erzeugt wird. Hierdurch wird sichergestellt, dass das Head-Mounted-Display immer ausreichend geladen ist, ohne dass zusätzliche Schritte zum Aufladen des Head-Mounted-Displays durchgeführt werden müssen. Die Ladeinrichtung kann auch als Präsenzerkennungsmittel verwendet werden, da eine Entnahme aus der Ladeeinrichtung erkannt und diese Information entsprechend verwendet werden kann.

Eine Ausbildung der Erfindung betrifft ein Fahrgeschäft, insbesondere Achterbahn, umfassend eine Fahrstrecke, auf der zumindest ein Fahrzeug beweglich angeordnet ist, wobei das Fahrzeug zur Aufnahme zumindest eines Fahrgasts ausgebildet ist, eine VR-Einrichtung, mit welcher eine einer Fahrt des Fahrgasts mit dem Fahrzeug entlang der Fahrstrecke entsprechende virtuelle Realität erzeugbar ist, die auf einem dem Fahrgast zugeordneten Head-Mounted-Display darstellbar ist, eine Fahrzeug-Positionserfassungseinrichtung zum Erfassen der Position des Fahrzeugs auf der Fahrstrecke, und eine Synchronisierungsvorrichtung nach einem der vorherigen Ausführungsformen, wobei das Fahrgeschäft derart eingerichtet ist, dass die virtuelle Realität mit der Position und der Ausrichtung des Head-Mounted-Displays synchronisiert wird, sobald das Head-Mounted-Display von der Basisstation entnommen wird und die virtuelle Realität unter Berücksichtigung der Position des Fahrzeugs auf der Fahrstrecke und der Position und der Ausrichtung des Head-Mounted-Displays in Bezug auf die Basisstation auf dem Head-Mounted-Display dargestellt wird.

Die technischen Effekte und Vorteile, die sich mit dem vorschlagsgemäßen Fahrgeschäft erreichen lassen, entsprechen denjenigen, die für die vorliegende Synchronisierungsvorrichtung erörtert worden sind. Aufgrund der Tatsache, dass die Synchronisierung des Head-Mounted-Displays mit der virtuellen Realität unabhängig vom Verhalten des Fahrgasts durchgeführt wird, können entsprechende Erläuterungen und Einweisungen entfallen. Fehlbedienungen und erneute Synchronisierungen können vermieden werden, wodurch das Fahrgeschäft mit einem höheren Durchsatz betrieben werden kann. Zudem sinkt der Personalaufwand, so dass das vorschlagsgemäße Fahrgeschäft im Vergleich zu herkömmlichen derartigen Fahrgeschäften deutlich wirtschaftlicher betrieben werden können.

Die Entnahme des Head-Mounted-Displays kann von der Display-Positionserfassungseinrichtung und/oder von einem Präsenzerkennungsmittel erkannt werden.

Eine weitere Ausbildung des Fahrgeschäfts ist dadurch gekennzeichnet, dass die Synchronisierungsvorrichtung und/oder die Basisstation am Fahrzeug angeordnet ist. Der Fahrgast wird beim Ein- und Aussteigen nicht vom Head-Mounted-Display gestört. Die Wahrscheinlichkeit, dass das Head-Mounted-Display beim Ein- und Aussteigen beschädigt wird oder verloren geht, wird verringert.

Gemäß einer fortentwickelten Ausbildung weist das Fahrzeug zumindest zwei Fahrgastaufnahmen zum Aufnehmen jeweils eines Fahrgasts auf, wobei jeder Fahrgastaufnahme ein Head-Mounted-Display zugeordnet ist. Um eine hohe Immersion zu erreichen, muss auch die Position des Head-Mounted-Displays und folglich des Fahrgasts in Bezug auf das Fahrzeug berücksichtigt werden. Insbesondere bei langen Fahrzeugen durchfahren die Fahrgäste, die in der ersten Reihe sitzen, einen bestimmten Streckenabschnitt früher als Fahrgäste, die in der letzten Reihe sitzen. Diese zeitliche Differenz muss bei den für die jeweiligen Fahrgäste dargestellten virtuellen Realitäten berücksichtigt werden. Zwar kann die Display-Positionserfassungseinrichtung auch die Position des Displays in Bezug auf das Fahrzeug ermitteln, allerdings hat die Zuordnung eines Head-Mounted-Displays zu einer Fahrgastaufnahme den Vorteil, dass diese Ermittlung entfallen kann. Die Rechenleistung, die von der Display-Positionserfassungseinrichtung verrichtet werden muss, lässt sich verringern.

Nach einer weiterentwickelten Ausbildung ist das Head-Mounted-Display mittels eines Kabels mit der Basisstation verbunden. Zumindest zum Prioritätszeitpunkt dieser Anmeldung lassen sich über ein Kabel deutlich höhere Datenvolumina übertragen als über eine Drahtlosverbindung. Zudem ist die Datenübertragung mittels eines Kabels störungsunempfindlicher gegenüber äußeren Einflüssen. Das Kabel kann so ausgebildet werden, dass es neben der Datenübertragung auch als Verliersicherung dient, beispielsweise für den Fall, dass das Head-Mounted-Display während der Fahrt vom Kopf des Fahrgasts abrutschen sollte. Darüber hinaus kann das Kabel auch als Schutz vor einer bewussten oder unbewussten Mitnahme des Head-Mounted-Displays durch den Fahrgast nach Beendigung der Fahrt dienen. Ferner kann dadurch auf einen schweren Akku innerhalb des Head-Mounted-Displays verzichtet werden und so das Tragegefühl erhöht werden.

Bei einer weiteren Ausbildung des Fahrgeschäfts ist vorgesehen, dass die Synchronisierungsvorrichtung außerhalb des Fahrzeugs angeordnet ist. Das Ausrüsten der Fahrzeuge mit einer derartigen Synchronisierungsvorrichtung ist üblicherweise aufwendiger als das Aufstellen der Synchronisierungsvorrichtung außerhalb der Fahrzeuge. Zudem wird das Gewicht der Fahrzeuge in dieser Ausbildung nicht von der Synchronisierungsvorrichtung erhöht. Fehlerhafte Head-Mounted-Displays können ausgetauscht werden, ohne dass der Zugang zum Fahrzeug gegeben sein muss, wodurch Verzögerungen im Betriebsablauf des Fahrzeugs vermieden werden. Es besteht die Möglichkeit, das Head-Mounted-Display vor Beginn und nach Abschluss der Fahrt außerhalb des Fahrzeugs auf- bzw. abzusetzen, so dass der Fahrgast die hierfür benötigte Zeit nicht im Fahrzeug verbringen muss, wodurch der Durchsatz des Fahrgeschäfts erhöht werden kann. An dieser Ausbildung wird sehr deutlich, dass die Synchronisierung des Head-Mounted-Displays zeitlich versetzt zum Start der Darstellung der virtuellen Realität erfolgen kann.

Eine weiterentwickelte Ausbildung des Fahrgeschäfts zeichnet sich dadurch aus, dass die VR-Einrichtung derart eingerichtet ist, dass eine der Position und der Ausrichtung des Head-Mounted-Displays außerhalb des Fahrzeugs entsprechende virtuelle Realität erzeugbar und auf dem dem Fahrgast zugeordneten Head-Mounted-Display darstellbar ist. In dieser Ausbildung ist die virtuelle Realität nicht nur auf die Fahrstrecke begrenzt. Vielmehr können auch die an die Fahrstrecke angrenzenden Bereiche des Fahrgeschäfts mit in die virtuelle Realität eingebunden werden. Das Erlebnis für den Fahrgast wird hierdurch gesteigert und eventuelle Wartezeiten können auf für den Fahrgast unterhaltsame Weise überbrückt werden. Zudem kann die virtuelle Realität so eingerichtet sein, dass ein bestimmter Fahrgast, welcher ein bestimmtes Head-Mounted-Display trägt, zu einer bestimmten Fahrgastaufnahme geleitet wird. In einigen Fahrgeschäften sind einige Fahrgastaufnahmen nicht für alle Fahrgäste zugänglich. Beispielsweise gehbehinderte Fahrgäste, die Unterstützung beim Ein- und Ausssteigen benötigen und über Rampen zum Bahnhof geführt werden sollen, können mit einem entsprechend identifizierten Head-Mounted-Display auf einem bestimmten Weg zu einer bestimmten Fahrgastaufnahme geleitet werden, wo ein Mitarbeiter des Fahrgeschäfts dem Fahrgast behilflich sein kann.

Eine Ausgestaltung der Erfindung betrifft ein Verfahren zum Betreiben insbesondere eines Fahrgeschäfts wie einer Achterbahn, nach einem der vorherigen Ausbildungen, mit einer Synchronisierungsvorrichtung nach einem der zuvor erläuterten Ausführungsformen, umfassend folgende Schritte:
- Erzeugen einer einer Fahrt eines Fahrgasts mit dem Fahrzeug entlang der Fahrstrecke entsprechenden virtuellen Realität mittels einer VR-Einrichtung,
- Erfassen der Position des Fahrzeugs auf der Fahrstrecke mittels einer Fahrzeug-Positionserfassungseinrichtung,
- Erfassen der Position und Ausrichtung des Head-Mounted-Displays mittels einer Display-Positionserfassungseinrichtung,
- Darstellen der virtuellen Realität auf einem dem Fahrgast zugeordneten Head-Mounted-Display,
- Synchronisieren der virtuellen Realität mit der Position und der Ausrichtung des Head-Mounted-Displays, sobald das Head-Mounted-Display von der Basisstation entnommen wird, wobei die virtuelle Realität unter Berücksichtigung der Position des Fahrzeugs auf der Fahrstrecke und der Position und der Ausrichtung des Head-Mounted-Displays in Bezug auf die Basisstation auf dem Head-Mounted-Display dargestellt wird.

Die technischen Effekte und Vorteile, die sich mit dem vorschlagsgemäßen Verfahren erreichen lassen, entsprechen denjenigen, die für das vorliegende Fahrgeschäft erörtert worden sind. Aufgrund der Tatsache, dass die Synchronisierung des Head-Mounted-Displays mit der virtuellen Realität unabhängig vom Verhalten des Fahrgasts durchgeführt wird, entfallen entsprechende Erläuterungen und Einweisungen. Fehlbedienungen und erneute Synchronisierungen können vermieden werden, wodurch das Fahrgeschäft mit einem höheren Durchsatz betrieben werden kann. Zudem sinkt der Personalaufwand, so dass das vorschlagsgemäße Fahrgeschäft deutlich wirtschaftlicher im Vergleich zu herkömmlichen derartigen Fahrgeschäften betrieben werden können.

Die Entnahme des Head-Mounted-Displays kann von der Display-Positionserfassungseinrichtung und/oder von einem Präsenzerkennungsmittel erkannt werden.

An dieser Stelle sei darauf hingewiesen, dass die vorliegende Synchronisierungsvorrichtung und das vorschlagsgemäße Verfahren auch unabhängig von einem Fahrgeschäft eingesetzt werden können. Die vorliegende Synchronisierungsvorrichtung und das vorschlagsgemäße Verfahren können in Themenparks, Fitnessstudios oder Escape-Rooms von Freizeit-und Games-Zentren eingesetzt werden, wie es beispielsweise in der WO 2013/050473 A1 gezeigt ist.

In einer weiteren Ausgestaltung kann das Verfahren den Schritt des Darstellens der virtuellen Realität auf dem Head-Mounted-Display umfassen, sobald die Display-Positionserfassungseinrichtung erkennt, dass sich das Head-Mounted-Display innerhalb eines wählbaren Bereichs des Fahrgeschäfts befindet. Wie bereits erwähnt, kann die virtuelle Realität nicht nur auf die Fahrstrecke begrenzt sein, sondern sich auch auf an die Fahrstrecke angrenzende Bereiche erstrecken. Die Darstellung der virtuellen Realität wird in dieser Ausgestaltung dann begonnen, sobald sich das Head-Mounted-Display und folglich der Fahrgast innerhalb des wählbaren Bereichs befinden. Der wählbare Bereich kann flexibel verändert werden, beispielsweise dann, wenn der Inhalt der virtuellen Realität geändert wird. Anzumerken ist, dass der wählbare Bereich mit dem Fahrzeug zusammenfallen kann.

Eine weitergebildete Ausgestaltung des Verfahrens umfasst folgende Schritte:
- Darstellen der virtuellen Realität auf dem Head-Mounted-Display, sobald die Fahrzeug-Positionserfassungseinrichtung erkennt, dass sich das Fahrzeug entlang der Fahrstrecke bewegt.

Zwar kann auch die Display-Positionserfassungseinrichtung erkennen, dass sich das Fahrzeug mit dem Head-Mounted-Display entlang der Fahrstrecke bewegt, allerdings kann die hierfür von der Display-Positionserfassungseinrichtung zu verrichtende Rechenleistung reduziert werden, wenn die Bewegung des Fahrzeugs entlang der Fahrstrecke von der Fahrzeug-Positionserfassungseinrichtung erkannt wird. Die Fahrzeug-Positionserfassungseinrichtung kann hierzu auch das von der Steuerung oder vom Operator des Fahrgeschäfts ausgegebene Startsignal für das Fahrzeug für den Beginn der Darstellung der virtuellen Realität verwenden.

Beispielhafte Ausführungsformen der Erfindung werden im Folgenden unter Bezugnahme auf die beigefügten Zeichnungen näher erläutert. Es zeigen
- Figur 1: ein Fahrgeschäft mit einer ersten Ausführungsform einer erfindungsgemäßen Synchronisierungsvorrichtung, und
- Figur 2: ein Fahrgeschäft mit einer zweiten Ausführungsform einer erfindungsgemäßen Synchronisierungsvorrichtung, jeweils anhand einer prinzipiellen Draufsicht.

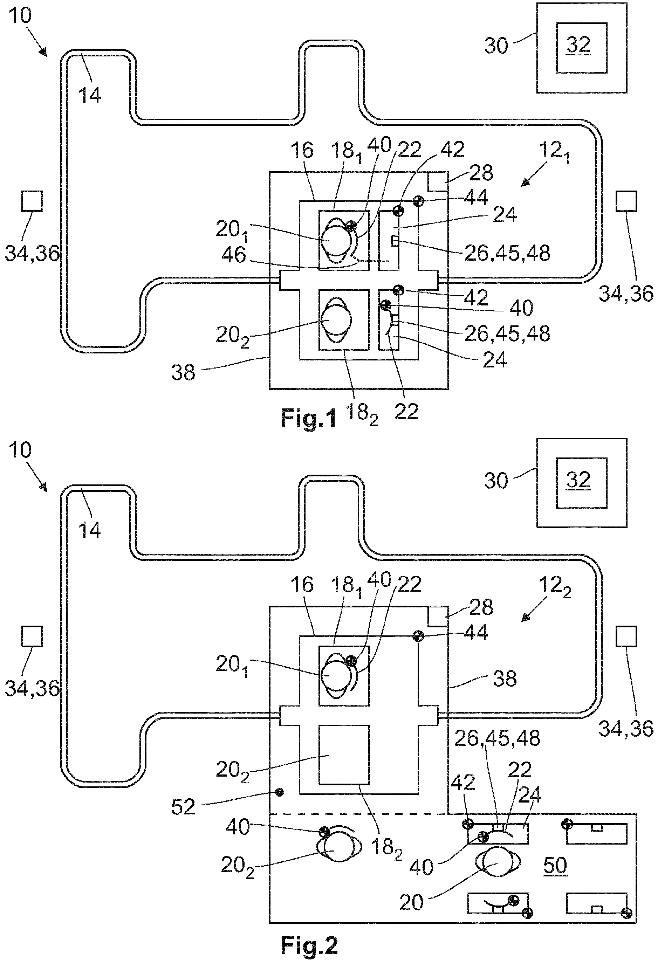

In Figur 1 ist ein Fahrgeschäft 10 mit einer ersten Ausführungsform einer erfindungsgemäßen Synchronisierungsvorrichtung 12₁ anhand einer prinzipiellen Darstellung gezeigt. Das Fahrgeschäft 10 umfasst eine Fahrstrecke 14, entlang welcher ein Fahrzeug 16 mittels nicht dargestellter Antriebsmittel bewegt werden kann. Selbstverständlich kann das Fahrgeschäft 10 mehr als ein Fahrzeug 16 aufweisen. Im dargestellten Ausführungsbeispiel handelt es sich beim Fahrgeschäft 10 um eine Achterbahn. Das Fahrzeug 16 weist eine erste Fahrgastaufnahme 18₁ und eine zweite Fahrgastaufnahme 18₂ auf, in welchen ein erster Fahrgast 20₁ bzw. ein zweiter Fahrgast 20₂ aufgenommen werden können.

Die Synchronisierungsvorrichtung 12₁ umfasst zumindest ein Head-Mounted-Display 22, mit welchem eine virtuelle Realität darstellbar ist. Weiterhin weist die Synchronisierungsvoreinrichtung eine Basisstation 24 zum Ablegen des Head-Mounted-Displays 22, auf. Für jede Fahrgastaufnahme 18₁, 18₂ ist im Fahrzeug 16 eine Basisstation 24 vorgesehen. Die Basisstation 24 ist mit Aufnahmemitteln 26 versehen, die dafür sorgen, dass das Head-Mounted-Display 22 nur in einer definierten Position und Ausrichtung in der Basisstation 24 abgelegt werden kann.

Darüber hinaus umfasst die Synchronisierungsvorrichtung 12₁ eine Display-Positionserfassungseinrichtung 28, mit der die Position und die Ausrichtung des Head-Mounted-Displays 22 erfasst werden kann.

Das Fahrgeschäft 10 weist ferner eine VR-Einrichtung 30 auf, mit welcher eine virtuelle Realität erzeugt werden kann. Hierzu weist die VR-Einrichtung 30 eine Recheneinheit 32 auf. Die VR-Einrichtung 30 kommuniziert drahtlos mit der Synchronisierungsvorrichtung 12₁ und dem Head-Mounted-Display 22, welches der Fahrgast 20 vergleichbar mit einer Brille trägt.

Weiterhin ist das Fahrgeschäft 10 mit einer Fahrzeug-Positionserfassungseinrichtung 34 ausgerüstet, die zum Erfassen der Position des Fahrzeugs 16 auf der Fahrstrecke 14 dient. Die Fahrzeug-Positionserfassungseinrichtung 34 weist Streckensensoren 36 auf, mit denen die Position des Fahrzeugs 16 auf der Fahrstrecke 14 erfasst und zur Recheneinheit 32 übermittelt wird, welche die Position des Fahrzeugs 16 auf der Fahrstrecke 14 beim Erzeugen der virtuellen Realität berücksichtigt.

Das Fahrgeschäft 10 wird auf folgende Weise betrieben: Im Ausgangszustand ist das Head-Mounted-Display 22 in der Basisstation 24 abgelegt. Wie erwähnt, sind die Aufnahmemittel 26 der Basisstation 24 so ausgebildet, dass das Head-Mounted-Display 22 nur in einer definierten Position und Ausrichtung in der Basisstation 24 abgelegt werden kann. In der der zweiten Fahrgastaufnahme 18₂ zugeordneten Basisstation 24 ist das Head-Mounted-Display 22 entsprechend abgelegt.

Das Fahrgeschäft 10 weist einen Bahnhof 38 auf, der von der Fahrstrecke 14 durchlaufen wird und in welchem das Fahrzeug 16 angehalten und wieder gestartet wird. Die Fahrgäste können im Bahnhof 38 in das Fahrzeug 16 einsteigen und wieder aussteigen. Sobald die Fahrgäste in den Fahrgastaufnahmen 18₁, 18₂ Platz genommen haben, können sie das ihrer Fahrgastaufnahme 18₁, 18₂ zugeordnete Head-Mounted-Display 22 aus der Basisstation 24 entnehmen und aufsetzen. In Figur 1 ist zu erkennen, dass der erste Fahrgast 20₁ das der ersten Fahrgastaufnahme 18₁ zugeordnete Head-Mounted-Display 22 bereits aufgesetzt hat, während sich das der zweiten Fahrgastaufnahme 18₂ zugeordnete Head-Mounted-Display 22 noch in der Basisstation 24 befindet.

Die Position und die Ausrichtung des Head-Mounted-Displays 22 können mit einem ersten Koordinatensystem 40 beschrieben werden. Die Bewegung und die Ausrichtung der Basisstation 24 können mit einem zweiten Koordinatensystem 42 beschrieben werden, während die Bewegung und die Ausrichtung des Fahrzeugs 16 mit einem dritten Koordinatensystem 44 beschrieben werden können. Im dargestellten Beispiel kann sich das Fahrzeug 16 nur in einer einzigen Weise entlang der Fahrstrecke 14 bewegen, so dass die Ausrichtung des Fahrzeugs 16 für jede Position auf der Fahrstrecke 14 bekannt ist. Mit der Fahrzeug-Positionserfassungseinrichtung 34 können die aktuelle Position des Fahrzeugs 16 und folglich die Geschwindigkeit ermittelt und beim Erzeugen der virtuellen Realität von der VR-Einrichtung berücksichtigt werden.

Da die Basisstation 24 fest am Fahrzeug 16 montiert ist, stehen das zweite Koordinatensystem 42 und das dritte Koordinatensystem 44 in einem festen Bezug zueinander, der sich nicht ändert.

Solange sich das Head-Mounted-Display 22 in der Basisstation 24 befindet, steht auch das erste Koordinatensystem 40 in einem festen Verhältnis zum zweiten und dritten Koordinatensystem 42, 44. Dies ändert sich aber, sobald der betreffende Fahrgast 20 das Head-Mounted-Display 22 aus der Basisstation 24 entnimmt. Die Entnahme aus der Basisstation 24 kann von der Display-Positionserfassungseinrichtung 28 registriert werden, allerdings weist die Basisstation 24 ein in die Aufnahmemittel 26 integriertes Präsenzerkennungsmittel 45 auf, welches beispielsweise in Form eines Reed-Kontakts realisiert ist und welches ein Hinweissignal erzeugt, sobald das Head-Mounted-Display 22 aus der Basisstation 24 entnommen wird. Das Hinweissignal wird an die Recheneinheit 32 der VR-Einrichtung 30 geschickt. Im Augenblick der Entnahme wird die virtuelle Realität mit der Position und der Ausrichtung des Head-Mounted-Displays 22 in der Basisstation 24 synchronisiert und die nachfolgenden Positionen und Ausrichtungen des Head-Mounted-Displays 22 auf die Position und Ausrichtung des Head-Mounted-Displays 22 in der Basisstation 24 bezogen. Die Entnahme aus der Basisstation 24 kann auch dazu genutzt werden, um die Darstellung der virtuellen Realität im Head-Mounted-Display 22 zu beginnen, was aber auch zu einem späteren Zeitpunkt erfolgen kann, beispielsweise dann, sobald die Fahrzeug-Positionserfassungseinrichtung 34 erkennt, dass sich das Fahrzeug 16 entlang der Fahrstrecke 14 bewegt. Auch hierzu werden entsprechende Signale an die Recheneinheit 32 der VR-Einrichtung 30 übermittelt. Andere auslösende Ereignisse können hierfür ebenfalls verwendet werden, beispielsweise das Schließen von hier nicht dargestellten Sicherheitsbügeln, ein Freigabesignal, welches von einem Mitarbeiter des Fahrgeschäfts 10 abgegeben wird, oder ein Startsignal, welches vom Operator des Fahrgeschäfts 10 abgegeben wird.

Eine Mithilfe des Fahrgasts 20 bei der Synchronisierung ist nicht notwendig. Sämtliche Änderungen der Position und der Ausrichtung des Head-Mounted-Displays 22 werden bei der Darstellung der virtuellen Realität von der VR-Einrichtung 30 berücksichtigt. Aufgrund der Signale der Fahrzeug-Positionserfassungseinrichtung 34 wird auch die Position des Fahrzeugs 16 auf der Fahrstrecke 14 bei der Darstellung der virtuellen Realität von der VR-Einrichtung 30 berücksichtigt, so dass eine hohe Immersion erreicht werden kann.

Sobald die Fahrt beendet ist, nehmen die Fahrgäste 20 das Head-Mounted-Display 22 ab, legen es wieder in der Basisstation 24 ab und verlassen das Fahrzeug 16 über den Bahnhof 38. Nun können nachfolgende Fahrgäste 20 das Fahrgeschäft 10 auf die beschriebene Weise nutzen.

Aus der Figur 1 geht zudem hervor, dass das Head-Mounted-Display 22 über ein Kabel 46 mit der Basisstation 24 verbunden ist. Das Kabel 46 kann zur Datenübertragung, zum Sichern des Head-Mounted-Displays 22 oder zum Laden des Head-Mounted-Displays 22 verwendet werden. Im dargestellten Beispiel ist aber eine Ladeeinrichtung 48 in die Aufnahmemittel 26 der Basisstation 24 integriert, so dass das Head-Mounted-Display 22 aufgeladen werden kann, sobald das Head-Mounted-Display 22 in der Basisstation 24 abgelegt ist.

In Figur 2 ist ein Fahrgeschäft 10 mit einer zweiten Ausführungsform einer erfindungsgemäßen Synchronisierungsvorrichtung 12₂ dargestellt. Der wesentliche Unterschied zum Fahrgeschäft 10 mit einer Synchronisierungsvorrichtung 12₁ gemäß der ersten Ausführungsform besteht darin, dass die Basisstationen 24 außerhalb des Fahrzeugs 16 angeordnet sind, beispielsweise in einem sich dem Bahnhof 38 anschließenden Wartebereich 50 des Fahrgeschäfts 10. Der grundsätzliche Aufbau und die grundsätzliche Funktionsweise der Synchronisierungsvorrichtung 12₂ nach der zweiten Ausführungsform unterscheiden sich aber nicht von derjenigen der ersten Ausführungsform. Da aber die Basisstationen 24 außerhalb der Fahrzeuge 16 angeordnet sind und ihre Position nicht ändern, stehen das zweite und das dritte Koordinatensystem 42, 44 nicht mehr in einem festen, unveränderlichen Verhältnis, wie es bei der ersten Ausführungsform der Synchronisierungsvorrichtung 12₁ der Fall ist.

Die Synchronisierung wird auch in der zweiten Ausführungsform der Synchronisierungsvorrichtung 12₂ dann vorgenommen, sobald der Fahrgast 20 das Head-Mounted-Display 22 von der Basisstation 24 entnimmt. Da der Fahrgast 20 aber noch eine bestimmte Strecke bis zum Bahnhof 38 und bis zum Fahrzeug 16 zurücklegen muss, ist es nicht ausgeschlossen, dass er das Head-Mounted-Display 22 bereits deutlich vor dem Bahnhof 38 und vor dem Einsteigen in das Fahrzeug 16 aufzieht, wie es der zweite Fahrgast 20₂ getan hat. Um ihm dennoch die notwendige Orientierung zu geben, kann entweder die reale Welt oder eine sich über das Fahrzeug 16 hinaus erstreckende virtuelle Realität eingeblendet werden. Bei der über das Fahrzeug 16 hinausgehenden virtuellen Realität werden Hindernisse der realen Welt so berücksichtigt, dass von diesen keine Gefahr für den Fahrgast 20 darstellen, der das Head-Mounted-Display 22 aufgesetzt hat. Die virtuelle Realität kann beispielsweise erst dann eingeblendet werden, wenn sich der Fahrgast 20 in einem wählbaren Bereich 52 innerhalb des Fahrgeschäfts 10 befindet, beispielsweise innerhalb des Bahnhofs 38 oder innerhalb des Fahrzeugs 16.

### Bezugszeichenliste

- 10: Fahrgeschäft
- 12: Synchronisierungsvorrichtung
- 12₁: erste Synchronisierungsvorrichtung
- 12₂: zweite Synchronisierungsvorrichtung
- 14: Fahrstrecke
- 16: Fahrzeug
- 18: Fahrgastaufnahme
- 18₁: erste Fahrgastaufnahme
- 18₂: zweite Fahrgastaufnahme
- 20: Fahrgast
- 20₁: erster Fahrgast
- 20₂: zweiter Fahrgast
- 22: Head-Mounted-Display
- 24: Basisstation
- 26: Aufnahmemittel
- 28: Display-Positionserfassungseinrichtung
- 30: VR-Einrichtung
- 32: Recheneinheit
- 34: Fahrzeug- Positionserfassungseinrichtung
- 36: Streckensensor
- 38: Bahnhof
- 40: erstes Koordinatensystem
- 42: zweites Koordinatensystem
- 44: drittes Koordinatensystem
- 45: Präsenzerkennungsmittel
- 46: Kabel
- 48: Ladeeinrichtung
- 50: Wartebereich
- 52: wählbarer Bereich

## Patentansprüche

1. Synchronisierungsvorrichtung zum Synchronisieren von Head-Mounted-Displays (22) mit einer virtuellen Welt insbesondere in einem Fahrgeschäft (10), umfassend
- zumindest ein Head-Mounted-Display (22), mit welchem eine von einer VR-Einrichtung (30) erzeugte virtuelle Realität darstellbar ist,
- eine Basisstation (24) zum Ablegen des Head-Mounted-Displays (22), wobei die Basisstation (24) Aufnahmemittel aufweist, mit denen das Head-Mounted-Display (22) in einer definierten Position und Ausrichtung in der Basisstation (24) ablegbar ist, und
- eine Display-Positionserfassungseinrichtung (28) zum Erfassen der Position und Ausrichtung des Head-Mounted-Displays (22), wobei
- die Synchronisierungsvorrichtung (12) derart eingerichtet ist, dass die virtuelle Realität mit dem Head-Mounted-Display (22) unter Berücksichtigung der von der Display-Positionserfassungseinrichtung (28) erfassten Position und Ausrichtung des Head-Mounted-Displays (22) in Bezug auf die Position und Ausrichtung des Head-Mounted-Displays (22) in der Basisstation (24) synchronisiert wird,
- **dadurch gekennzeichnet, dass** die Synchronisation erfolgt, sobald das Head-Mounted-Display (22) von der Basisstation (24) entnommen wird.

2. Synchronisierungsvorrichtung nach Anspruch 1,
**dadurch gekennzeichnet, dass** die Basisstation (24) Präsenzerkennungsmittel (45) aufweisen, mit denen erkennbar ist, ob das Head-Mounted-Display (22) in der Basisstation (24) abgelegt ist und wann das Head-Mounted-Display (22) von der Basisstation (24) entnommen wird.

3. Synchronisierungsvorrichtung nach einem der Ansprüche 1 oder 2,
**dadurch gekennzeichnet, dass** die Basisstation (24) eine Ladeeinrichtung (48) zum Aufladen des Head-Mounted-Displays (22) aufweist.

4. Fahrgeschäft (10), insbesondere Achterbahn, umfassend
- eine Fahrstrecke (14), auf der zumindest ein Fahrzeug (16) beweglich angeordnet ist, wobei das Fahrzeug (16) zur Aufnahme zumindest eines Fahrgasts (20) ausgebildet ist,
- eine VR-Einrichtung (30), mit welcher eine einer Fahrt des Fahrgasts (20) mit dem Fahrzeug (16) entlang der Fahrstrecke (14) entsprechende virtuelle Realität erzeugbar ist, die auf einem dem Fahrgast (20) zugeordneten Head-Mounted-Display (22) darstellbar ist,
- eine Fahrzeug-Positionserfassungseinrichtung (34) zum Erfassen der Position des Fahrzeugs (16) auf der Fahrstrecke (14), und
- eine Synchronisierungsvorrichtung (12) nach einem der vorherigen Ansprüche, wobei das Fahrgeschäft (10) derart eingerichtet ist, dass
- die virtuelle Realität mit der Position und der Ausrichtung des Head-Mounted-Displays (22) synchronisiert wird, sobald das Head-Mounted-Display (22) von der Basisstation (24) entnommen wird, und
- die virtuelle Realität unter Berücksichtigung der Position des Fahrzeugs (16) auf der Fahrstrecke (14) und der Position und der Ausrichtung des Head-Mounted-Displays (22) in Bezug auf die Basisstation (24) auf dem Head-Mounted-Display (22) dargestellt wird.

5. Fahrgeschäft (10) nach Anspruch 4,
**dadurch gekennzeichnet, dass** die Synchronisierungsvorrichtung und/oder die Basisstation (24) am Fahrzeug (16) angeordnet ist.

6. Fahrgeschäft (10) nach Anspruch 5,
**dadurch gekennzeichnet, dass** das Fahrzeug (16) zumindest zwei Fahrgastaufnahmen (18) zum Aufnehmen jeweils eines Fahrgasts (20) aufweist und jeder Fahrgastaufnahme (18) ein Head-Mounted-Display (22) zugeordnet ist.

7. Fahrgeschäft (10) nach Anspruch 6,
**dadurch gekennzeichnet, dass** das Head-Mounted-Display (22) mittels eines Kabels (46) mit der Basisstation (24) verbunden ist.

8. Fahrgeschäft (10) nach Anspruch 4,
**dadurch gekennzeichnet, dass** die Synchronisierungsvorrichtung (12) außerhalb des Fahrzeugs (16) angeordnet ist.

9. Fahrgeschäft (10) nach einem der Ansprüche 4 bis 8,
**dadurch gekennzeichnet, dass** die VR-Einrichtung (30) derart eingerichtet ist, dass eine der Position und der Ausrichtung des Head-Mounted-Displays (22) außerhalb des Fahrzeugs (16) entsprechende virtuelle Realität erzeugbar und auf dem dem Fahrgast (20) zugeordneten Head-Mounted-Display (22) darstellbar ist.

10. Verfahren zum Betreiben eines Fahrgeschäft (10) nach einem der Ansprüche 4 bis 9, mit einer Synchronisierungsvorrichtung (12) nach einem der Ansprüche 1 bis 3, umfassend folgende Schritte:
- Erzeugen einer einer Fahrt eines Fahrgasts (20) mit dem Fahrzeug (16) entlang der Fahrstrecke (14) entsprechenden virtuellen Realität mittels einer VR-Einrichtung (30),
- Erfassen der Position des Fahrzeugs (16) auf der Fahrstrecke (14) mittels einer Fahrzeug-Positionserfassungseinrichtung (34),
- Erfassen der Position und Ausrichtung des Head-Mounted-Displays (22) mittels einer Display-Positionserfassungseinrichtung (28),
- Darstellen der virtuellen Realität auf einem dem Fahrgast (20) zugeordneten Head-Mounted-Display (22) in Abhängigkeit der Position und der Ausrichtung des Head-Mounted-Displays (22) im Fahrzeug (16),
- Synchronisieren der virtuellen Realität mit der Position und der Ausrichtung des Head-Mounted-Displays (22), sobald das Head-Mounted-Display (22) von der Basisstation (24) entnommen wird, wobei die virtuelle Realität unter Berücksichtigung der Position des Fahrzeugs (16) auf der Fahrstrecke (14) und der Position und der Ausrichtung des Head-Mounted-Displays (22) in Bezug auf die Basisstation (24) auf dem Head-Mounted-Display (22) dargestellt wird.

11. Verfahren nach Anspruch 10, umfassend folgenden Schritt:
- Darstellen der virtuellen Realität auf dem Head-Mounted-Display (22), sobald die Display-Positionserfassungseinrichtung (28) erkennt, dass sich das Head-Mounted-Display (22) innerhalb eines wählbaren Bereichs (52) des Fahrgeschäfts (10) befindet.

12. Verfahren nach Anspruch 10, umfassend folgenden Schritt:
- Darstellen der virtuellen Realität auf dem Head-Mounted-Display (22), sobald die Fahrzeug-Positionserfassungseinrichtung (34) erkennt, dass sich das Fahrzeug (16) entlang der Fahrstrecke bewegt.

## Claims

1. Synchronization apparatus for synchronizing head-mounted displays (22) with a virtual world, in particular in an amusement ride (10), comprising
- at least one head-mounted display (22), by means of which a virtual reality generated by a VR system (30) can be displayed,
- a base station (24) for depositing the head-mounted display (22), wherein the base station (24) comprises holding means with which the head-mounted display (22) can be placed into the base station (24) in a defined position and orientation, and
- a display position detection apparatus (28) for detecting the position and orientation of the head-mounted display (22), wherein
- the synchronization apparatus (12) is configured such that the virtual reality is synchronized with the head-mounted display (22), based on the position and orientation of the head-mounted display (22) detected by the display position detection device (28), with reference to the position and orientation of the head-mounted display in the base station (24),
- **characterized in that** the synchronization is carried out as soon as the head-mounted display (22) is removed from the base station (24).

2. Synchronization apparatus in accordance with claim 1,
**characterized in that** the base station (24) comprises presence detection means (45) with which it can be detected whether the head-mounted display (22) is deposited in the base station (24) and when the head-mounted display (22) is removed from the base station (24).

3. Synchronization apparatus in accordance with either of claims 1 or 2,
**characterized in that** the base station (24) has a charging device (48) for charging the head-mounted display (22).

4. Amusement ride (10), in particular a roller coaster, comprising
- a circuit track (14) on which at least one vehicle (16) is movably disposed, wherein the vehicle (16) is constructed to accommodate at least one passenger (20),
- a VR apparatus (30), by means of which virtual reality can be generated that corresponds to a ride of the passenger (20) in the vehicle (16) along the circuit track (14) and which can be displayed on a head-mounted display (22) assigned to the passenger (20),
- a vehicle position detection apparatus (34) for detecting the position of the vehicle (16) on the circuit track (14), and
- a synchronization apparatus (12) in accordance with any of the preceding claims, wherein the amusement ride (10) is constructed such that
- the virtual reality is synchronized with the position and the orientation of the head-mounted display (22) as soon as the head-mounted display (22) is removed from the base station (24), and
- the virtual reality is displayed on the head-mounted display (22) based on the position of the vehicle (16) on the circuit track (14) and on the position and the orientation of the head-mounted display (22) with reference to the base station (24).

5. Amusement ride (10) in accordance with claim 4,
**characterized in that** the synchronization apparatus and/or the base station (24) is disposed on the vehicle (16).

6. Amusement ride (10) in accordance with claim 5,
**characterized in that** the vehicle (16) comprises at least two passenger reception means (18), each for the reception of one passenger (20), and a head-mounted display (22) is assigned to every passenger reception means.

7. Amusement ride (10) in accordance with claim 6,
**characterized in that** the head-mounted display (22) is connected to the base station (24) by means of a cable (46).

8. Amusement ride (10) in accordance with claim 4,
**characterized in that** the synchronization apparatus (12) is disposed outside of the vehicle (16).

9. Amusement ride (10) in accordance with any of claims 4 to 8,
**characterized in that** the VR apparatus (30) is configured such that a virtual reality can be generated and displayed on the head-mounted display (22) assigned to the passenger (20) that corresponds to the position and orientation of the head-mounted display (22) outside of the vehicle (16).

10. Method for operating an amusement ride (10) in accordance with any of claims 4 to 9, with a synchronization apparatus (12) in accordance with any of claims 1 to 3, comprising the following steps:
- generating a virtual reality corresponding to a ride of a passenger (20) in a vehicle (16) along the circuit track (14) by means of a VR apparatus (30),
- detecting the position of the vehicle (16) on the circuit track (14) by means of a vehicle position detection apparatus (34),
- detecting the position and orientation of the head-mounted display (22) by means of a display position detection apparatus (28),
- displaying a virtual reality on a head-mounted display (22) assigned to the passenger (20) in dependency on the position and the orientation of the head-mounted display (22) in the vehicle (16),
- synchronizing the virtual reality with the position and the orientation of the head-mounted display (22) as soon as the head-mounted display (22) is removed from the base station (24), wherein the virtual reality is displayed on the head-mounted display (22) based on the position of the vehicle (16) on the circuit track (14) and on the position and orientation of the head-mounted display (22) with reference to the base station (24).

11. Method in accordance with claim 10, comprising the following steps:
- displaying a virtual reality on the head-mounted display (22) as soon as the display position detection apparatus (28) detects that the head-mounted display is located within a selectable area (52) of the amusement ride (10).

12. Method in accordance with claim 10, comprising the following steps:
- displaying a virtual reality on the head-mounted display (22) as soon as the vehicle position detection apparatus (34) detects that the vehicle (16) is moving along the circuit track.

## Revendications

1. Dispositif de synchronisation pour synchroniser des lunettes de visualisation (22) avec un mode virtuel notamment dans une attraction foraine (10) comprenant :
- au moins des lunettes de visualisation (22) qui permettent de représenter une réalité virtuelle générée par une installation de réalité virtuelle (30),
- une station de base (24) pour déposer les lunettes de visualisation (22), cette station de base (24) comportant des moyens de réception recevant les lunettes de visualisation (22) déposées dans une position et une orientation définie dans la station de base (24), et
- une installation de saisie de position des lunettes (28) pour saisir la position et l'orientation des lunettes de visualisation (22),
dispositif dans lequel
- le dispositif de synchronisation (12) est conçu pour que la réalité virtuelle soit synchronisée avec les lunettes de visualisation (22) en tenant compte de la position et de l'orientation des lunettes de visualisation (22) saisies par l'installation de saisie de position des lunettes (28), par rapport à la position et l'orientation des lunettes de visualisation (22) dans la station de base (24),
dispositif **caractérisé en ce que**
la synchronisation se fait dès que les lunettes de visualisation (22) sont enlevées de la station de base (24).

2. Dispositif de synchronisation selon la revendication 1,
**caractérisé en ce que**
la station de base (24) comporte des moyens de détection de présence (45) qui permettent de reconnaître si les lunettes de visualisation (22) sont déposées dans la station de base (24) et si les lunettes de visualisation (22) sont prises de la station de base (24).

3. Dispositif de synchronisation selon l'une des revendications 1 ou 2,
**caractérisé en ce que**
la station de base (24) comporte un chargeur (48) pour charger les lunettes de visualisation (22).

4. Attraction foraine (10) notamment grand huit comprenant
- un trajet (14) sur lequel circule au moins un véhicule (16), conçu pour recevoir au moins un passager (20),
- une installation de réalité virtuelle (30) qui génère une réalité virtuelle correspondant à la circulation du passager (20) avec le véhicule (16) le long du trajet (14), cette réalité virtuelle étant représentée sur les lunettes de visualisation (22) données au passager (20),
- une installation de saisie de position de véhicule (34) pour saisir la position du véhicule (16) sur le trajet (14), et
- un dispositif de synchronisation (12) selon l'une des revendications précédentes, l'attraction foraine (10) étant conçue pour que :
- la réalité virtuelle soit synchronisée avec la position et l'orientation des lunettes de visualisation (22) dès que les lunettes de visualisation (22) sont prises dans la station de base (24), et
- la réalité virtuelle est représentée sur les lunettes de visualisation (22) en tenant compte de la position du véhicule (16) sur le trajet (14) et de la position et de l'orientation des lunettes de visualisation (22) par rapport à la station de base (24).

5. Attraction foraine (10) selon la revendication 4,
**caractérisée en ce que**
le dispositif de synchronisation et/ou la station de base (24) équipent le véhicule (16).

6. Attraction foraine (10) selon la revendication 5,
**caractérisée en ce que**
le véhicule (16) comporte au moins deux places de passager (18) pour recevoir chacune un passager (20) et chaque place de passager (18) est équipée de lunettes de visualisation (22).

7. Attraction foraine (10) selon la revendication 6,
**caractérisée en ce que**
les lunettes de visualisations (22) sont reliées à la station de base (24) par un câble (46).

8. Attraction foraine (10) selon la revendication 4,
**caractérisée en ce que**
le dispositif de synchronisation (12) est extérieur au véhicule (16).

9. Attraction foraine (10) selon l'une des revendications 4 à 8,
**caractérisée en ce que**
l'installation de visualisation (30) est conçue pour générer une réalité virtuelle à l'extérieur du véhicule (16) qui correspond à la position et à l'orientation des lunettes de visualisation (22) et qui peut être présentée par les lunettes de visualisation (22) données au passager (20).

10. Procédé de gestion d'une attraction foraine (10) selon l'une des revendications 4 à 9, comportant un dispositif de synchronisation (12) selon l'une des revendications 1 à 3, comprenant les étapes consistant à :
- générer une réalité virtuelle correspondant au trajet d'un passager (20) avec le véhicule (16) le long du trajet (14) à l'aide d'une installation de réalité virtuelle (30),
- saisir la position du véhicule (16) sur le trajet (14) à l'aide de l'installation de saisie de la position du véhicule (34),
- saisir la position et l'orientation des lunettes de visualisation (22) à l'aide de l'installation de saisie de position des lunettes (28),
- représenter la réalité virtuelle sur les lunettes de visualisation (22) attribuées au passager (20) en fonction de la position et de l'orientation des lunettes de visualisation (22) dans le véhicule (16),
- synchroniser la réalité virtuelle sur la position et l'orientation des lunettes de visualisation (22) dès que les lunettes de visualisation (22) sont enlevées de la station de base (24),
- la réalité virtuelle étant affichée sur les lunettes de visualisation (22) en tenant compte de la position du véhicule (16) sur le trajet (14) et de la position et de l'orientation des lunettes de visualisation (22) par rapport à la station de base (24).

11. Procédé selon la revendication 10,
comprenant les étapes suivantes consistant à :
représenter la réalité virtuelle sur les lunettes de visualisation (22) dès que l'installation de saisie de position d'affichage (28) constate que les lunettes de visualisation (22) se trouvent dans une plage sélectionnée (52) de l'attraction foraine (10).

12. Procédé selon la revendication 10,
comprenant les étapes suivantes consistant à :
représenter la réalité virtuelle sur les lunettes de visualisation (22) dès que l'installation de saisie de position du véhicule (34) constate que le véhicule (16) se déplace le long du trajet.
